# EUROPÄISCHE PATENTSCHRIFT

(11) **EP 3 186 881 B1**
(45) Veröffentlichungstag und Bekanntmachung des Hinweises auf die Patenterteilung: **08.07.2020**
(21) Anmeldenummer: 15763824.8
(22) Anmeldetag: 29.08.2015
(51) Int. Cl.: H02P 8/12

(54) **VERFAHREN UND SCHALTUNGSANORDNUNG ZUM BETREIBEN EINES SCHRITTMOTORS**
METHOD AND CIRCUIT ARRANGEMENT FOR OPERATING A STEPPER MOTOR
PROCÉDÉ ET ENSEMBLE CIRCUIT POUR FAIRE FONCTIONNER UN MOTEUR PAS À PAS

(30) Priorität: 29.08.2014 DE 102014112500
(43) Veröffentlichungstag der Anmeldung: 05.07.2017
(73) Patentinhaber: Trinamic Motion Control GmbH & Co. KG, 22769 Hamburg (DE)
(72) Erfinder: DWERSTEG, Bernhard, 25462 Rellingen (DE)
(74) Vertreter: Heun, Thomas
(86) Internationale Anmeldenummer: PCT/DE2015/100361
(87) Internationale Veröffentlichungsnummer: WO 2016/029908

(56) Entgegenhaltungen:
- EP-A2- 2 680 432
- DE-C1- 19 609 803

## Beschreibung

Die Erfindung betrifft ein Verfahren und eine Schaltungsanordnung zum Betreiben eines Schrittmotors durch drehstellungsabhängige Bestromung (Kommutierung) der Spulen des Motors (Motorwicklungen) insbesondere mit gechopperten Spulenstromimpulsen.

Zum Betreiben eines Schrittmotors ist es erforderlich, die an einem Stator angeordneten Spulen oder Wicklungen des Motors (beide Begriffe sind nachfolgend synonym zu verstehen) in Abhängigkeit von einer momentanen Drehstellung des Rotors in Relation zu dem Stator mit Strom mit geeigneter Polarität zu bestromen. Es ist bekannt, eine Information über eine momentane Drehstellung mittels eines an dem Motor montierten Encoders zu gewinnen. Ein solcher Encoder hat zwar einige Vorteile, die z.B. darin bestehen, dass der Motor bei encoderbasierter Kommutierung überlastet werden kann und dass der Motor in kürzester Zeit mit dem maximalen Drehmoment ohne Vorgabe einer Beschleunigungskurve beschleunigt werden kann, ohne dass die Gefahr von Schrittverlusten besteht. Wesentliche Nachteile eines Encoders bestehen jedoch darin, dass dieser eine zusätzliche Komponente am Motor darstellt, die relativ aufwändig justiert werden muss und damit einen erheblichen Kostenfaktor bildet.

Deshalb wurden Verfahren und Schaltungsanordnungen entwickelt, mit denen die momentane Drehstellung des Rotors in Relation zu dem Stator elektronisch ermittelt werden kann und ebenfalls eine Überlastung des Motors ohne wesentliches Risiko von Schrittverlusten sowie eine Beschleunigung des Motors mit einem maximalen Drehmoment ohne Vorgabe einer Beschleunigungskurve möglich ist. Solche Verfahren und Schaltungsanordnungen sind z.B. aus der DE 41 21 617 und der DE 196 09 803 bekannt.

Dabei wird der Zeitpunkt erfasst, zu dem sich ein magnetischer Pol des Rotors in radialer Richtung mit einer der Statorspulen überdeckt, d.h. der Winkelversatz zwischen beiden in Drehrichtung des Rotors ist 0°. Zu diesem Zeitpunkt kann somit durch Bestromung der betreffenden Motorspule bzw. Wicklung kein Drehmoment mehr zwischen dem Rotor und dem Stator erzeugt werden, so dass eine nächste Motorspule bzw. Wicklung zur Bestromung freigegeben werden kann.

Die Bestromung einer Wicklung wird durch Erzeugen eines Schrittimpulses ausgelöst und erfolgt dann insbesondere in der Weise, dass der Strom nach dem Einschalten in der Wicklung zunächst bis auf einen vorbestimmten maximalen Wert oder Zielstromwert ansteigt und dann gechoppert wird, d.h. die Stromzufuhr in die Motorwicklung wird für eine definierte, üblicherweise konstante Zeitdauer t_{OFF} unterbrochen, während der Strom aufgrund der elektrischen Verluste in der Motorwicklung absinkt, wobei nach Ablauf einer definierten Zeit t_{OFF} wieder Strom in die Motorwicklung eingeprägt wird, bis der vorbestimmte Zielstromwert wieder erreicht ist und sich dieser Vorgang dann wiederholt. Die Motorwicklung wird dabei also mit einer Folge von Stromimpulsen (Chopperimpulse) mit der jeweiligen Dauer tᵢₘₚ bestromt ("gechoppert").

Da sich die Induktivität der Motorwicklung bei der Annäherung des Rotors an den betreffenden Stator erhöht, bis sie zum Zeitpunkt der Überdeckung zwischen beiden ein Maximum erreicht, wird in der betreffenden Motorwicklung durch diese Annäherung immer mehr Energie gespeichert. Dies hat zur Folge, dass die elektrischen Verluste während der definierten Zeit t_{OFF} zunehmend geringer werden und somit auch die Dauer tᵢₘₚ der anschließenden Stromimpulse, die erforderlich ist, um den vorbestimmten Zielstromwert wieder zu erreichen, zunehmend kürzer wird.

Nach dem Erreichen der Überdeckung entfernt sich der Rotor wieder von der betreffenden Motorwicklung, so dass der Wert der Induktivität dieser Motorwicklung wieder entsprechend abnimmt. Aufgrund der in der Wicklung gespeicherten Energie nimmt dabei die Stromamplitude in der betreffenden Motorwicklung zu, so dass nach Ablauf der definierten Zeit t_{OFF} die Stromamplitude bereits über dem vorbestimmten maximalen Stromwert liegt und die definierte Zeit t_{OFF} sofort wieder gestartet wird. Da somit also während der gesamten Bewegung beginnend mit der Annäherung des Rotors an eine Motorwicklung, deren beiderseitige Überdeckung sowie der anschließenden Entfernung des Rotors von der Motorwicklung die Dauer tᵢₘₚ der Stromimpulse durch die betreffende Wicklung immer kürzer wird, kann eine Impulsdauer tx (Referenz-Impulsdauer) definiert werden, bei der sich der Rotor und eine der Motorwicklungen überdecken. Wenn dann also die Dauer tᵢₘₚ der Stromimpulse erstmals die definierte Referenz-Impulsdauer tx unterschreitet, kann ein Freigabesignal zur Freigabe der Bestromung einer nächsten Motorwicklung erzeugt werden.

Wann dann tatsächlich durch Erzeugen eines Schrittimpulses auf die nächste Motorspule umgeschaltet und diese mit den oben genannten Chopperimpulsen bestromt wird, hängt im wesentlichen von dem Betriebszustand des Motors, d.h. einer anliegenden Last bzw. einem erforderlichen Drehmoment, der Höhe einer Drehgeschwindigkeit oder einer gewünschten Beschleunigung oder Verzögerung des Motors (d.h. einem Bewegungsprofil) ab.

Als allgemeiner Stand der Technik offenbart die EP 2 680 432 ein Verfahren zum Ansteuern eines Schrittmotors durch Bestromung einer Statorspule mit Chopperimpulsen. Dabei wird die durch die Zeitdauer, die zum Erreichen eines Strom-Sollwertes nach dem Wiedereinschalten des Stromflusses benötigt wird, definierte Breite jedes Chopperimpulses mit einer vorgebbaren Referenz-Zeitdauer verglichen und mit der Bestromung einer nächsten Statorspule begonnen, sobald die Breite des Chopperimpulses erstmals die Referenz-Zeitdauer unterschreitet. Die Referenz-Zeitdauer wird während der Ansteuerung des Schrittmotors an die Arbeitsbedingungen des Schrittmotors angepasst.

Eine Aufgabe, die der Erfindung zugrunde liegt, besteht darin, ein Verfahren und eine Schaltungsanordnung der eingangs genannten Art zu schaffen, mit dem/der ein Schrittmotor in Abhängigkeit von seinem jeweiligen Betriebszustand besonders effizient und insbesondere stromsparend betrieben werden kann.

Gelöst wird diese Aufgabe mit Verfahren gemäß Anspruch 1 und 2 sowie Schaltungsanordnungen gemäß Anspruch 11 und 12.

Die abhängigen Ansprüche haben beispielhafte Weiterbildungen des Verfahrens bzw. der Schaltungsanordnung zum Inhalt, die für bestimmte Anwendungsfälle besonders vorteilhaft sind.

Der Erfindung liegt die Erkenntnis zugrunde, dass gemäß einer ersten Variante ein (erster) zeitlicher Abstand (Zeitdauer) zwischen der Erzeugung des oben genannten Freigabesignals und der anschließenden Erzeugung des oben genannten Schrittimpulses dafür verwendet werden kann, den Motorstrom um einen dem zeitlichen Abstand entsprechenden Betrag abzusenken, oder, sofern erwünscht, bei gleichem oder nur geringfügig abgesenktem Motorstrom die Drehzahl und/oder die Beschleunigung des Motors und/oder die Motorlast entsprechend zu erhöhen, um auf diese Weise den genannten zeitlichen Abstand zu verkleinern bzw. einen effizienteren Betrieb des Motors zu erzielen, und zwar insbesondere dann, wenn der zeitliche Abstand einen vorbestimmten (oberen) Grenzwert überschreitet.

Entsprechendes gilt auch umgekehrt. Somit kann also als zusätzliche oder auch alternative Maßnahme der Motorstrom um einen dem (ersten) zeitlichen Abstand entsprechenden Betrag erhöht, oder, sofern erwünscht, bei gleichem oder nur geringfügig erhöhtem Motorstrom die Drehzahl und/oder die Beschleunigung des Motors und/oder die Motorlast entsprechend vermindert werden, um den genannten zeitlichen Abstand zu vergrößern, und zwar insbesondere dann, wenn dieser Abstand einen vorbestimmten (unteren) Grenzwert unterschreitet.

Die Auswahl der genannten Alternativen kann zum Beispiel in Abhängigkeit von den Anforderungen eines konkreten Anwendungsfalls oder der Art des Motors etc. vorgenommen werden.

Insbesondere kann der Motorstrom in Abhängigkeit von dem genannten zeitlichen Abstand so vermindert bzw. erhöht oder geregelt werden, dass der Lastwinkel des Motors stets in einem Bereich von etwas weniger als 90° liegt (d.h. so groß gewählt wird, dass der Motor nahe dem optimalen Arbeitspunkt arbeitet). Der genannte zeitliche Abstand soll deshalb im Folgenden als "Drehmomentreserve" bezeichnet werden, wobei deren Höhe direkt proportional zu dem (ersten) zeitlichen Abstand (Zeitdauer) zwischen dem Setzen eines Freigabesignals und der nachfolgenden Erzeugung eines Schrittimpulses ist.

Bei einer zweiten Variante, bei der ein (zweiter) zeitlicher Abstand (Zeitdauer) zwischen der Erzeugung eines Schrittimpulses und dem nachfolgenden Setzen eines Freigabesignals erfasst wird, ist die Höhe der Drehmomentreserve umgekehrt proportional zu diesem (zweiten) zeitlichen Abstand. Somit gilt also in diesem Fall, dass je kleiner dieser Abstand ist, desto größer die Drehmomentreserve ist, und der Motorstrom entsprechend abgesenkt, oder, sofern erwünscht, bei gleichem oder nur geringfügig abgesenktem Motorstrom die Drehzahl und/oder die Beschleunigung des Motors und/oder die Motorlast entsprechend erhöht werden kann, um auf diese Weise den (zweiten) zeitlichen Abstand zu vergrößern bzw. einen effizienteren Betrieb des Motors zu erzielen, und zwar insbesondere dann, wenn der (zweite) zeitliche Abstand einen vorbestimmten (unteren) Grenzwert unterschreitet.

Auch bei dieser zweiten Variante gilt wiederum umgekehrt, dass als zusätzliche oder auch alternative Maßnahme der Motorstrom um einen dem (zweiten) zeitlichen Abstand entsprechenden Betrag erhöht, oder, sofern erwünscht, bei gleichem oder nur geringfügig erhöhtem Motorstrom die Drehzahl und/oder die Beschleunigung des Motors und/oder die Motorlast entsprechend vermindert werden kann, um den (zweiten) zeitlichen Abstand zu verkleinern, und zwar insbesondere dann, wenn dieser Abstand einen vorbestimmten (oberen) Grenzwert überschreitet.

Die oben genannte Regelung der Motorströme auf einen Lastwinkel von etwa 90° hat auch den Vorteil, dass die vektorielle Gegen-EMK des Motors einen Winkel von etwa 90° zur anregenden Spannung aufweist, so dass die zur Einprägung eines Stromes notwendige Momentanspannung in entsprechendem Maße sinkt. Eine Absenkung des Motorstromes bei einer relativ geringen Last hat auch den Vorteil, dass der Ohm'sche Spannungsabfall an den Motorspulen absinkt. Damit wiederum erhöht sich die effektiv an der Motorinduktivität wirksame Spannung, die gleichzeitig einen entsprechend geringeren Zielstrom in die Spule einprägen muss. In Abhängigkeit von dem Motor kann damit ein wesentlich höherer Drehzahlbereich abgedeckt werden. Auch eine Erhöhung der Drehzahl und/oder ggf. der Beschleunigung im Fall einer geringen Motorlast trägt bei geeigneten Anwendungen zur Energieeinsparung bei, da der Motor nicht nur mit geringerem Strom und damit geringerer Ohm'scher Verlustleistung betrieben wird, sondern gleichzeitig auch die Dauer der Motordrehung bis zum Erreichen einer Zielposition verkürzt wird.

Die Messung der ersten bzw. zweiten zeitlichen Abstände, d.h. der Drehmomentreserve, soll für einen gegebenen Zielstromwert des Motors vorzugsweise auch unabhängig von dessen momentaner Drehzahl ein klares Bild von der Last an dem Motor geben. Da sich die oben genannten ersten und zweiten zeitlichen Abstände auch mit der Drehzahl des Motors verändern bzw. diese bestimmen, muss die Drehmomentreserve relativ zu einer tatsächlichen Drehzahl gemessen werden (jedenfalls sofern der Motor nicht nur mit im Wesentlichen konstanter Drehzahl laufen soll), um ein dem Lastwinkel proportionales bzw. umgekehrt proportionales und von der Drehzahl unabhängiges Maß zu erzeugen.

Dies kann bei der ersten und der zweiten Variante zum Beispiel in der Weise erreicht werden, dass jeder zeitliche Abstand zwischen jeweils zwei aufeinander folgenden Schrittimpulsen (oder zwischen zwei aufeinander folgenden Freigabesignalen) in eine stets gleiche Anzahl von zeitlichen Intervallen (oder Zählimpulsen) unterteilt wird, die alle stets die gleiche, jedoch mit der Drehzahl veränderliche zeitliche Länge (bzw. zeitlichen Abstand) aufweisen, d.h. die Länge oder Abstände der Intervalle (bzw. der Zählimpulse) verändert sich entsprechend einer aktuellen Drehzahl und damit entsprechend dem zeitlichen Abstand zwischen zwei aufeinander folgenden Schrittimpulsen bzw. Freigabesignalen in der Weise, dass zwischen diesen stets die gleiche Anzahl von Intervallen (bzw. Zählimpulsen) erzeugt wird.

Dazu wird vorzugsweise zunächst eine Solldrehzahl des Motors festgelegt, die unterhalb der theoretischen, mit dem Motor erreichbaren Drehzahl liegt. Diese Solldrehzahl ist charakterisiert durch die zeitliche Solldauer zwischen zwei Schrittimpulsen, die z.B. mit einem Schritt-Zeitgeber erzeugt werden. Diese zeitliche Solldauer zwischen zwei Schrittimpulsen (oder zwischen zwei Freigabesignalen) bei der Solldrehzahl wird z.B. in eine Anzahl gleicher zeitlicher Intervalle oder Zählimpulse unterteilt.

Bei der ersten Variante wird dann mit der Erzeugung eines Freigabesignals ein Zähler gestartet, der die Intervalle (bzw. Zählimpulse), und zwar beginnend mit einem Zählerstand Null (vorwärts) zählt. Wenn dann ein nächster Schrittimpuls erzeugt wird, stoppt der Zähler, und der Zählerstand zum Zeitpunkt der Erzeugung des Schrittimpuls wird gespeichert. Die Höhe des Zählerstandes ist ein Maß für die aktuelle Drehmomentreserve (d.h. direkt proportional zu dieser) und damit für die an dem Motor anliegende Last. Je später der Schrittimpuls erzeugt wird, desto höher ist der Zählerstand und damit auch die Drehmomentreserve, d.h. umso kleiner ist der Lastwinkel und umso geringer ist die momentan anliegende Last.

Bei der zweiten Variante wird mit dem Auftreten eines Schrittimpulses vorzugsweise ein Rückwärts-Zähler gestartet, der die Intervalle (bzw. Zählimpulse) rückwärts zählt, und zwar beginnend mit einem der genannten Anzahl von Intervallen (bzw. Zählimpulsen) zwischen zwei Schrittimpulsen entsprechenden Zählerstand rückwärts bis auf den Wert Null. Wenn dann ein nächstes Freigabesignal erzeugt wird, stoppt der Zähler, und der Zählerstand zum Zeitpunkt der Erzeugung des Freigabesignals wird gespeichert. Die Höhe des Zählerstandes ist ein Maß für die aktuelle Drehmomentreserve (d.h. ebenso wie bei der ersten Variante direkt proportional zu dieser) und damit für die an dem Motor anliegende Last. Wenn das Freigabesignal nicht bis zum Eintreffen des nächsten Schrittimpulsen erzeugt wird, ist der Zählerstand und die Drehmomentreserve Null. Je früher das Freigabesignal erzeugt wird, desto höher ist der Zählerstand und damit auch die Drehmomentreserve, d.h. umso kleiner ist der Lastwinkel und umso geringer ist die momentan anliegende Last.

Vorzugsweise werden für die Messung der Drehmomentreserve mehrere solche Zählungen durchgeführt (z.B. über vier Vollschritte) und die Zählerstände dann gemittelt, um eventuelle, durch elektrische und physikalische Ungenauigkeiten verursachte Abweichungen zu glätten bzw. zu kompensieren.

Wenn keine Drehmomentreserve vorhanden ist, bleibt der Motorstrom auf seinem vorbestimmten Maximalwert bzw. wird möglichst schnell auf diesen Wert erhöht. Um sicherzustellen, dass der Motor stets der Schrittvorgabe folgen kann und bei einer Erhöhung der Motorlast nicht zunächst abgebremst wird, wird der Motorstrom vorzugsweise nicht erst bei einer Drehmomentreserve von Null, sondern (durch Auswertung des Zählerstandes) bereits bei einer Drehmomentreserve hoch geregelt, die in einem Bereich liegt, der noch geringfügig größer ist als Null.

Vorzugsweise sollte umgekehrt der Motorstrom nur so weit vermindert werden (und folglich die Drehmomentreserve nicht unter einen bestimmten Wert abgesenkt werden), dass sich der Lastwinkel des Motors nicht zu nah an 90° annähert, sodass der Motorstrom bei steigender Motorlast rechtzeitig erhöht werden kann und das Freigabesignal nicht aufgrund der zu hohen Last zu spät erzeugt wird.

Vorzugsweise wird mindestens ein Grenzwert des Drehmoments (Drehmoment-Reserveschwelle), d.h. ein diesem entsprechender erster bzw. zweiter zeitlicher Abstand bzw. ein Zählerstand, definiert, ab dem der Strom abgesenkt bzw. wieder erhöht wird. Dieser Grenzwert ist vorzugsweise konfigurierbar. Der Grenzwert kann ein einzelner Wert oder ein bestimmter Bereich sein, um Schwingungen zu vermeiden. Innerhalb dieses Bereiches wird der Motorstrom dann nicht verändert. Es kann zum Beispiel vorteilhaft sein, einen oberen und einen unteren Grenzwert zu definieren, wobei der obere Grenzwert eine maximale Drehmomentreserve und der untere Grenzwert eine minimale Drehmomentreserve definiert. Wenn dann der obere Grenzwert überschritten wird, so wird der Motorstrom vermindert, und wenn der untere Grenzwert unterschritten wird, so wird der Motorstrom erhöht, so dass die Drehmomentreserve stets innerhalb eines bestimmten Bereiches bleibt.

Der Betrag, mit dem der Motorstrom beim Überschreiten oder Unterschreiten der Grenzwerte verändert wird, ist vorzugsweise ebenfalls konfigurierbar, um das Regelverhalten an die Anwendung anpassen zu können. Wenn der Strom zu schnell erhöht oder gesenkt wird, kann es zu Schwingungen kommen, oder das Motorverhalten wird ruckartig.

Weitere Parameter, die zur Realisierung einer erfindungsgemäßen Schaltungsanordnung bei Anwendung eines Chopper-Verfahrens bevorzugt festgelegt werden können, sind die Zeitdauer t_{OFF}, während der die Stromzufuhr in die jeweilige Motorwicklung zwischen zwei Stromimpulsen (Chopperimpulse) unterbrochen wird (d.h. die Zeitdauer zwischen zwei aufeinander folgenden Stromimpulsen), sowie die Referenz-Impulsdauer tx, mit der die Zeitdauer tᵢₘₚ der Stromimpulse verglichen wird und auf deren Grundlage das Freigabesignal erzeugt wird, wenn die Zeitdauer tᵢₘₚ erstmals gleich oder kleiner ist als die Referenz-Impulsdauer tx.

Die Zeitdauer t_{OFF} ist während des Motorbetriebes vorzugsweise konstant, kann jedoch bei entsprechender Auslegung der Schaltungsanordnung für einen bestimmten Motor oder einen bestimmten Anwendungsfall vorzugsweise konfigurierbar sein. Dabei hat eine relativ lange Zeitdauer t_{OFF} zur Folge, dass die Stromimpulse zeitlich relativ weit auseinander liegen und sich somit ihre Anzahl vermindert, diese dafür aber relativ lang werden. Bei einer relativ kurzen Zeitdauer t_{OFF} werden relativ viele und relativ kurze Stromimpulse erzeugt, die zeitlich relativ dicht aufeinander folgen. Dadurch können die Motorspulen etwas genauer, feiner und schneller kommutiert werden. Der Motor kann somit insgesamt dynamischer auf Änderungen der Last oder des Betriebszustandes reagieren, und die Referenz-Impulsdauer tx kann feiner eingestellt werden.

Die Referenz-Impulsdauer tx, die, wie bereits erwähnt wurde, eine Vergleichs-Zeitdauer zur Bewertung der Länge der Stromimpulse darstellt, ist eine Funktion von verschiedenen Motorparametern wie insbesondere der Induktivität und dem Ohm'schen Widerstand der Motorwicklungen, der Temperatur des Motors, sowie der Versorgungsspannung und dem jeweils in die Wicklungen eingeprägten Strom. Prinzipielles Ziel ist es, die Referenz-Impulsdauer tx so festzulegen, dass die Leistung des Motors durch entsprechend zeitgerechte Erzeugung des genannten Freigabesignals optimal ausgenutzt wird. Je kürzer die Referenz-Impulsdauer tx festgelegt wird, desto langsamer dreht der Motor, da es zeitlich gesehen länger dauert, bis der Strom in der betreffenden Motorwicklung auf den vorbestimmten maximalen Stromwert angestiegen ist und die Zeitdauer tᵢₘₚ der Stromimpulse dann entsprechend kurz geworden ist. Das Freigabesignal wird dann also erst entsprechend später erzeugt. Je länger hingegen die Referenz-Impulsdauer tx festgelegt wird, desto höhere Motor-Drehzahlen sind erreichbar, wobei allerdings das erzielbare Drehmoment abnimmt, da frühzeitiger Stromimpulse auftreten, deren Zeitdauer tᵢₘₚ kürzer wird als die Referenz-Impulsdauer tx, so dass das Freigabesignals entsprechend früher erzeugt wird.

Auch die anliegende Motorspannung und der vorbestimmte maximale Motor- bzw. Wicklungsstrom (Zielstromwert) beeinflussen die Erzeugung der Freigabesignale.

Die anliegende Motorspannung ist üblicherweise ein fester Wert, der durch die Anwendung bzw. die Auslegung der Elektronik definiert ist. Je höher diese Spannung ist, desto schneller wird der vorbestimmte Zielstromwert in den Motorspulen erreicht, und desto früher werden auch die Chopperimpulse kürzer als die Referenz-Impulsdauer tx, und desto früher wird das Freigabesignal erzeugt. Wenn alle anderen Parameter konstant sind, bedeutet dies, dass der Motor mit höherer Spannung schneller dreht.

Je höher der in die Motorspulen einzuprägende Zielstromwert ist, desto mehr Drehmoment steht zur Verfügung, und desto länger dauert es, bis dieser in die Motorspulen eingeprägt worden ist. Umso länger dauert es auch, bis die Chopperimpulse kürzer werden als die Referenz-Impulsdauer tx. Dies bedeutet, dass das Freigabesignal entsprechend später erzeugt wird und die maximal erreichbare Geschwindigkeit des Motors sinkt.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: ein beispielhaftes Blockschaltbild einer erfindungsgemäßen Schaltungsanordnung zum Betreiben eines Schrittmotors;
- Fig. 2: verschiedene Signalverläufe in Abhängigkeit von verschiedenen Positionen eines Rotors in Relation zu einem Stator eines Schrittmotors;
- Fig. 3: ein Flussdiagramm eines Ablaufes zur Ermittlung einer Drehmomentreserve;
- Fig. 4: eine schematische Darstellung der zeitlichen Struktur einer Drehmomentreserve;
- Fig. 5: ein Flussdiagramm eines Ablaufes zur Bewertung einer ermittelten Drehmomentreserve; und
- Fig. 6: einen gemessenen Verlauf des Stroms in einer Motorwicklung in Abhängigkeit von einer an dem Motor anliegenden Last.

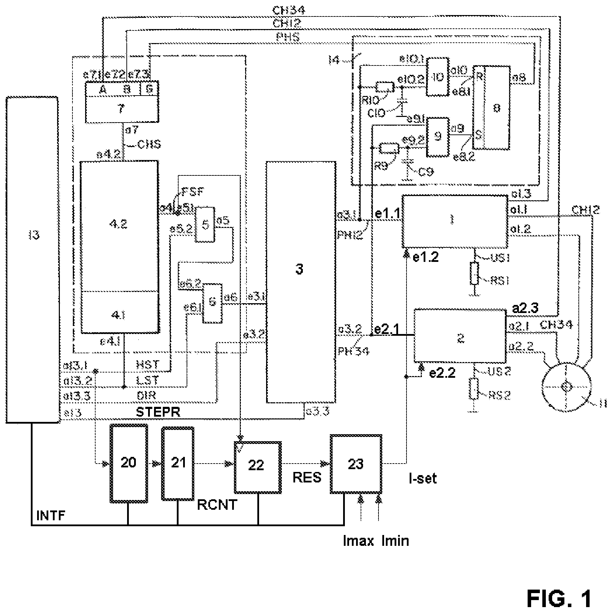

Figur 1 zeigt ein beispielhaftes Blockschaltbild einer Schaltungsanordnung gemäß der Erfindung zum Betreiben eines Schrittmotors 11 unter bevorzugter Anwendung eines Chopper-Verfahrens. Diese Schaltungsanordnung basiert auf einer aus der eingangs genannten DE 196 09 803 und der DE 41 21 617 bekannten Schaltungsanordnung, die in der erfindungsgemäßen Weise weitergebildet ist.

Im Einzelnen umfasst die Schaltungsanordnung eine erste Treiber- oder Leistungsendstufe 1 mit einem ersten Messwiderstand RS1 für den tatsächlich durch eine erste Spule (Wicklung) oder ein erstes Spulenpaar des Motors 11 fließenden Strom, sowie eine zweite Treiber- oder Leistungsendstufe 2 mit einem zweiten Messwiderstand RS2 für den tatsächlich durch eine zweite Spule (Wicklung) oder ein zweites Spulenpaar des Motors 11 fließenden Strom. Die erste und die zweite Treiberstufe 1, 2 dienen jeweils zur Erzeugung eines ersten bzw. eines zweiten gechopperten Wicklungs- oder Spulenstroms (Strom- oder Chopperimpulse) CH12; CH34 für die erste Spule (Wicklung) oder das erste Spulenpaar bzw. die zweite Spule (Wicklung) oder das zweite Spulenpaar des Schrittmotors 11.

Die Schaltungsanordnung umfasst ferner einen Signalgenerator 3 zur Erzeugung eines ersten und eines zweiten Phasensignals PH12, PH34 zur Auswahl bzw. Festlegung der Spulenstromrichtung für die erste bzw. die zweite Treiberstufe 1, 2 anhand eines Schrittsignals (Schrittimpuls) und eines Drehrichtungssignals, sowie eine Bewertungsschaltung 4.2 zum Vergleichen der zeitlichen Länge der Spulenstromimpulse CH12, CH34 mit einer Referenz-Impulsdauer tx und zur Erzeugung eines Freigabesignals FSF zur Freigabe einer Bestromung einer nächsten Spule (Wicklung) oder einem nächsten Spulenpaar des Motors zum Beispiel in der Weise, dass das Freigabesignal FSF einen logischen H-Pegel einnimmt, wenn ein Spulenstromimpuls CH12, CH34 zeitlich kürzer wird als die Referenz-Impulsdauer tx, und einen logischen L-Pegel einnimmt, wenn ein Spulenstromimpuls CH12, CH34 zeitlich länger (oder gleich) ist als die Referenz-Impulsdauer tx.

Die Schaltungsanordnung umfasst weiterhin ein Zeitregister 4.1 zur Speicherung der Referenz-Impulsdauer tx, ein UND-Gatter 5 zur logischen Verknüpfung des Freigabesignals FSF mit ersten Schrittimpulsen HST, die eine Ziel-Schrittfrequenz des Motors aufweisen und bestimmen, ein ODER-Gatter 6 zur logischen Verknüpfung des Ausgangssignals des UND-Gatters 5 mit zweiten Schrittimpulsen LST, die eine Mindest-Schrittfrequenz des Motors aufweisen und bestimmen (und somit eine entsprechend geringere Frequenz aufweisen als die ersten Schrittimpulse HST), wobei der Ausgang des ODER-Gatters 6 zur Zuführung eines Wicklungs- oder Spulenfortschaltsignals mit einem ersten Eingang e3.1 des Signalgenerators 3 verbunden ist, sowie einen Mikroprozessor 13 zur Erzeugung der ersten Schrittimpulse HST an einem ersten Ausgang a13.1, der zweiten Schrittimpulse LST an einem zweiten Ausgang a13.2, der auch mit einem Eingang e4.1 des Zeitregisters 4.1 verbunden ist, sowie eines Drehrichtungssignals DIR an einem dritten Ausgang a13.3, der zur Zuführung des Drehrichtungssignals DIR mit einem zweiten Eingang e3.2 des Signalgenerators 3 verbunden ist. Einem Eingang e13 des Mikroprozessors 13 wird schließlich ein von dem Signalgenerator 3 an einem dritten Ausgang a3.3 erzeugtes Quittungssignal STEPR zugeführt, nachdem ein Schritt ausgeführt wurde.

Die mittels des Mikroprozessors 13 erzeugten zweiten Schrittimpulse LST haben zwei Funktionen. Zum einen können sie dazu dienen, zum Beispiel durch ihre durch den Mikroprozessor 13 veränderbare zeitliche Länge ihres logischen H-Pegels die Referenz-Impulsdauer tx zu verändern bzw. zu bestimmen, zum anderen dienen die zweiten Schrittimpulse LST dazu, eine Wicklungsfortschaltung durch den Signalgenerator 3 zu erzwingen, ohne dass die Bedingungen für das Freigabesignal FSF und die ersten Schrittimpulse HST erfüllt sind, so dass die Periodendauer der zweiten Schrittimpulse LST also eine Mindest-Schrittfrequenz des Motors bestimmt.

Die beiden Treiberstufen 1, 2 weisen jeweils einen ersten und einen zweiten Eingang e1.1, e1.2 bzw. e2.1, e2.2 auf, wobei die ersten Eingänge e1.1, e2.1 mit einem ersten bzw. zweiten Ausgang a3.1, a3.2 des Signalgenerators 3 zur Zuführung der Phasensignale PH12; PH34 verbunden sind. Ausgänge a1.1, a1.2 bzw. a2.1, a2.2 der beiden Treiberstufen 1; 2 sind zur Zuführung des ersten bzw. zweiten gechopperten Spulenstroms CH12; CH34 mit der ersten Spule oder dem ersten Spulenpaar bzw. der zweiten Spule oder dem zweiten Spulenpaar des Schrittmotors 11 verbunden.

Vorzugsweise umfasst die Schaltungsanordnung ferner eine optionale Umschalteinrichtung 7 für die gechopperten Spulenströme CH12, CH34 mit einem ersten und einem zweiten Eingang e7.1, e7.2, der zur Zuführung des ersten bzw. zweiten gechopperten Spulenstroms CH12; CH34 mit einem dritten Ausgang a1.3, a2.3 der ersten bzw. der zweiten Treiberschaltung 1, 2 verbunden ist. Die Umschalteinrichtung 7 umfasst ferner einen dritten Eingang e7.3, der zur Zuführung eines Phasenselektionssignals PHS zur Umschaltung der Umschalteinrichtung 7 mit einem Ausgang einer optionalen Phasenauswahlschaltung 14 verbunden ist. Ein Ausgang a7 der Umschalteinrichtung 7 ist mit einem Eingang e4.2 der Bewertungsschaltung 4.2 zur Zuführung des mit dem Phasenselektionssignal PHS ausgewählten ersten oder zweiten gechopperten Spulenstroms CH12; CH34 zu der Bewertungsschaltung 4.2 verbunden.

Die Schaltungsanordnung umfasst vorzugsweise ferner die optionale Phasenauswahlschaltung 14 mit einem ersten und einem zweiten Eingang, die zur Zuführung des ersten bzw. zweiten Phasensignals PH12; PH34 mit dem ersten bzw. zweiten Ausgang a3.1; a3.2 des Signalgenerators 3 verbunden sind, um das Phasenselektionssignal PHS aus den beiden Phasensignalen PH12; PH34 zu erzeugen.

Die optionale Phasenauswahlschaltung 14 weist ein erstes und ein zweites Exklusiv-ODER-Gatter 9, 10 sowie ein RS-Flip-Flop 8 mit einem Rücksetzeingang e8.1, einem Setzeingang e8.2 sowie einem Ausgang a8 auf, der den Ausgang der Phasenauswahlschaltung 14 darstellt und, wie oben bereits erwähnt wurde, mit dem dritten Eingang e7.3 der Umschalteinrichtung 7 zur Zuführung des Phasenselektionssignals PHS verbunden ist. Der Setzeingang e8.2 ist mit einem Ausgang des ersten Exklusiv-ODER-Gatters 9 verbunden, während an dem Rücksetzeingang e8.1 ein Ausgang des zweiten Exklusiv-ODER-Gatters 10 anliegt.

Das erste Exklusiv-ODER-Gatter 9 umfasst einen ersten und einen zweiten Eingang e9.1, e9.2, wobei der erste Eingang e9.1 mit dem zweiten Ausgang a3.2 des Signalgenerators 3 und der zweite Eingang e9.2 über einen seriellen Widerstand R9 und einen parallelen Kondensator C9 mit dem zweiten Ausgang a3.2 des Signalgenerators 3 verbunden ist. Das zweite Exklusiv-ODER-Gatter 10 umfasst ebenfalls einen ersten und einen zweiten Eingang e10.1, e10.2, wobei der erste Eingang e10.1 mit dem ersten Ausgang a3.1 des Signalgenerators 3 und der zweite Eingang e10.2 über einen seriellen Widerstand R10 und einen parallelen Kondensator C10 mit dem ersten Ausgang a3.1 des Signalgenerators 3 verbunden ist.

Die Phasenauswahlschaltung 14 erzeugt damit das Phasenselektionssignal PHS in der Weise, dass es z.B. einen logischen L-Pegel einnimmt, wenn in dem ersten Phasensignal PH12 ein Pegelwechsel aufgetreten ist und einen logischen H-Pegel einnimmt, wenn in dem zweiten Phasensignal PH34 ein Pegelwechsel aufgetreten ist. Damit wird also durch Schalten der Umschalteinrichtung 7 mittels des Phasenselektionssignals PHS jeweils derjenige gechopperte Spulenstrom CH12, CH34 der Bewertungsschaltung 4.2 zugeführt, der für die nachfolgende Spulen- oder Wicklungsumschaltung bezüglich der zeitlichen Länge von dessen Chopperimpulsen CH12, CH34 zu bewerten, d.h. mit der in dem Zeitregister 4.1 gespeicherten Referenz-Impulsdauer tx zu vergleichen ist.

Zur Ermittlung der Drehmomentreserve gemäß der oben erläuterten zweiten Variante umfasst die Schaltungsanordnung erfindungsgemäß zum Beispiel einen Frequenzvervielfacher 20, einen Zähler 21, einen Zwischenspeicher 22 sowie einen Stromregler 23.

Ein Eingang des Frequenzvervielfachers 20 ist mit dem ersten Ausgang a13.1 des Mikroprozessors 13 zur Zuführung der Schrittimpulse HST zu dem Frequenzvervielfacher 20 verbunden. Ein Ausgang des Frequenzvervielfachers 20 ist mit einem Eingang des Zählers 21 verbunden, dessen Ausgang an einem ersten Eingang des Zwischenspeichers 22 anliegt. Einem zweiten Eingang (Takteingang) des Zwischenspeichers 22 wird das an dem Ausgang a4 der Bewertungsschaltung 4.2 anliegende Freigabesignal FSF zugeführt. Ein Ausgang des Zwischenspeichers 22 ist mit einem ersten Eingang des Stromreglers 23 verbunden. Einem zweiten Eingang des Stromreglers 23 wird ein vorbestimmter maximaler Spulenstrom (Zielstromwert) Imax zugeführt, während an einem dritten Eingang des Stromreglers 23 ein vorbestimmter minimaler Spulenstrom Imin anliegt. Ein Ausgang des Stromreglers 23 ist schließlich mit einem zweiten Eingang e1.2 und e2.2 der ersten und der zweiten Treiberendstufe 1, 2 verbunden.

Mit dem Frequenzvervielfacher 20 werden Zählimpulse erzeugt, die eine Frequenz aufweisen, die um einen Vervielfachungsfaktor, zum Beispiel um den Faktor 256, höher ist als die Frequenz der ersten Schrittimpulse HST. Der Zähler 21, der entsprechend dem Vervielfachungsfaktor in diesem Fall ein 8 Bit-Zähler ist, zählt diese Zählimpulse (Frequenz-vervielfachte Schrittimpulse) vorzugsweise rückwärts, und zwar beginnend mit dem Wert 255, bis auf den Wert Null und beginnt dann, d.h. mit jedem neuen Schrittimpuls HST, wieder bei dem Wert 255 bis auf den Wert Null rückwärts zu zählen. Jeder aktuelle Zählerstand wird in Form eines Zählerstandssignals RCNT dem Zwischenspeicher 22 übermittelt. Sobald der Zwischenspeicher 22 durch das Freigabesignal FSF getaktet wird, wird der zu diesem Zeitpunkt in dem Zwischenspeicher 22 gespeicherte Zählerstand an den Stromregler 23 übermittelt.

Wie oben bereits erläutert wurde, stellt dieser Zählerstand ein Maß für die Drehmomentreserve dar, wobei diese umso größer ist, je größer der Zählstand ist und umgekehrt. Natürlich könnte auch vorwärts gezählt werden, so dass dann ein umgekehrter Zusammenhang zwischen dem Zählerstand und der Drehmomentreserve besteht. Es sind auch weitere Alternativen denkbar, wie zum Beispiel eine direkte Zeitmessung zwischen dem Setzen eines Freigabesignals FSF und der Erzeugung eines nächsten Schrittimpulses HST wie es eingangs bereits beschrieben wurde.

Mit dem Stromregler 23 wird dann ein Stromwert Iset festgelegt, der zwischen dem vorbestimmten maximalen und dem vorbestimmten minimalen Stromwert Imax, Imin liegt und umso größer ist, je kleiner die Drehmomentreserve ist und umso kleiner ist, je größer die Drehmomentreserve ist. Dieser Stromwert Iset wird der ersten und der zweiten Treiberschaltung 1, 2 zugeführt und dient zur entsprechenden Erhöhung bzw. Verminderung des tatsächlich durch die Motorspulen getriebenen Stroms, d.h. der gechopperten Spulenstromimpulse.

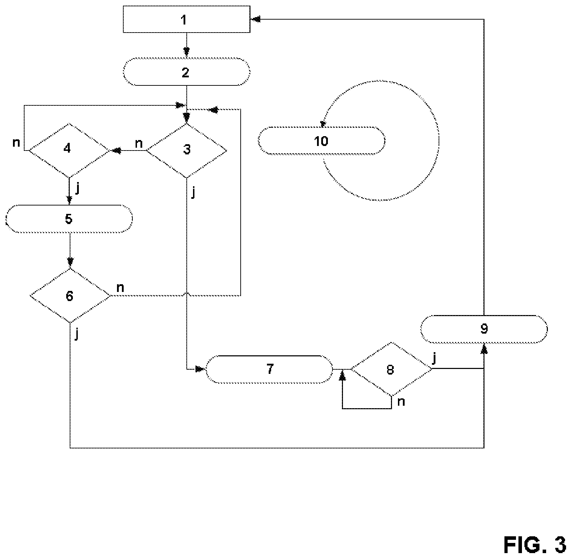

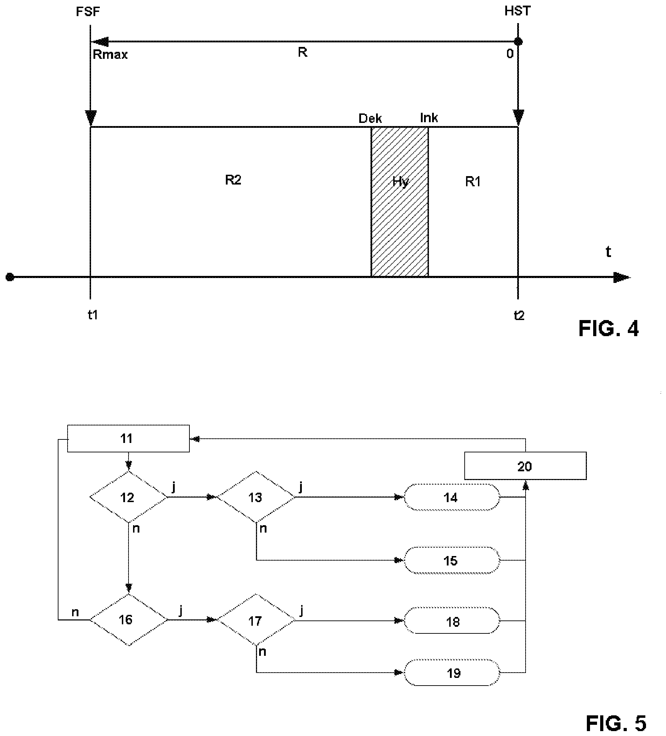

Der Frequenzvervielfacher 20, der Zähler 21, der Zwischenspeicher 22 sowie der Stromregler 23 sind vorzugsweise über ein Interface INTF mit dem Mikroprozessor 13 verbunden oder ganz oder teilweise als Bestandteil des Mikroprozessors 13 realisiert, um zur Ermittlung des Stromwertes Iset angesteuert zu werden, wie es nachfolgend mit Bezug auf die Figuren 3 und 5 beschrieben werden wird.

Alternativ dazu kann auch die oben erläuterte erste Variante realisiert werden, indem ein Vorwärts-Zähler für die Zählimpulse durch ein Freigabesignal FSF gestartet und durch einen Schrittimpuls HST gestoppt wird, um dann aus dem Zählerstand die diesem direkt proportionale Drehmomentreserve zu ermitteln.

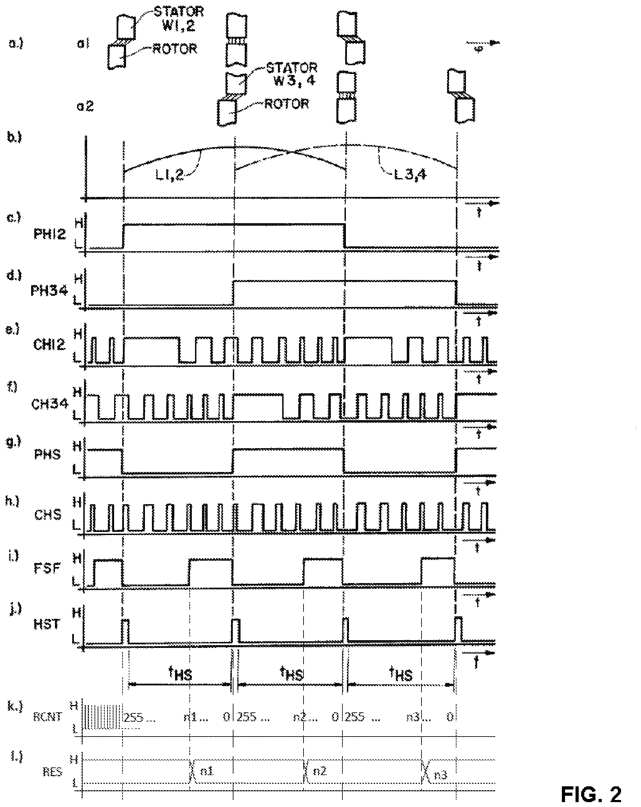

Figur 2 zeigt die Zusammenhänge der zeitlichen Verläufe der oben genannten Signale in Abhängigkeit von verschiedenen relativen Stellungen zwischen einem Rotor und einem ersten Stator W1,2 für die erste Spule (Wicklung) oder das erste Spulenpaar gemäß Figur 2a) a1, bzw. zwischen dem Rotor und einem zweiten Stator W3,4 für die zweite Spule (Wicklung) oder das zweite Spulenpaar gemäß Figur 2a) a2 bei Drehung des Rotors in Pfeilrichtung.

Figur 2b) zeigt den Verlauf der Induktivität L1,2 der ersten Spule sowie den Verlauf der Induktivität L3,4 der zweiten Spule in Abhängigkeit von der Drehstellung des Rotors. Wie oben bereits erwähnt wurde, haben die Induktivitäten jeweils ein Maximum, wenn sich der Stator der betreffenden Spule und der Rotor überdecken.

Figur 2c) zeigt den Verlauf des ersten Phasensignals PH12 am ersten Ausgang e3.1 des Signalgenerators 3 für die erste Spule, während in Figur 2d) der Verlauf des zweiten Phasensignals PH34 am zweiten Ausgang e3.12 des Signalgenerators 3 für die zweite Spule dargestellt ist.

Figur 2e) zeigt den Verlauf des ersten gechopperten Spulenstroms CH12 für die ersten Spule (Wicklung), während in Figur 2f) der Verlauf des zweiten gechopperten Spulenstroms CH34 für die zweite Spule (Wicklung) dargestellt ist.

Figur 2g) zeigt den Verlauf des Phasenselektionssignals PHS, während in Figur 2h) der Verlauf des damit jeweils selektierten gechopperten Spulenstroms CHS dargestellt ist, der über die Umschalteinrichtung 7 dem Eingang e4.2 der Bewertungsschaltung 4.2 zugeführt wird.

In Figur 2i) ist der Verlauf des resultierenden, mit der Bewertungsschaltung 4.2 erzeugten Freigabesignals FSF dargestellt, während in Figur 2j) die Schrittimpulse HST mit der Ziel-Schrittfrequenz (entsprechend ihrem zeitlichen Abstand t_{HS}) dargestellt sind, durch die jeweils ein nächster Schritt des Motors ausgeführt wird. Im Zusammenhang dieser beiden Figuren wird auch deutlich, dass das Freigabesignal FSF abgeschaltet, d.h. auf logischen 0-Pegel gesetzt wird, sobald eine steigende Flanke eines Schrittimpulses HST auftritt.

Figur 2k) zeigt schematisch das von dem Frequenzvervielfacher 20 vervielfachte Schrittimpulssignal HST (Zählimpulse) dessen Impulse von dem Zähler 21 rückwärts gezählt werden, während schließlich in Figur 2I) das die Zählerstände n1, n2, n3,.. repräsentierende Signal RES dargestellt ist, das jeweils zum Zeitpunkt der Triggerung des Zwischenspeichers 22 durch das Freigabesignal FSF (gemäß der zweiten Variante) dem Stromregler 23 zugeführt wird.

Mit der Schaltungsanordnung gemäß Figur 1 und den damit realisierten Signalverläufen gemäß Figur 2 wird in vorteilhafter Weise eine zuverlässige Erzeugung eines Freigabesignals FSF mit einer Absenkung bzw. Anhebung des durch die Spulen getriebenen Stroms kombiniert, indem der zeitliche Abstand ("Drehmomentreserve") zwischen einer Erzeugung (insbesondere einem Wechsel von logischem 0- auf logischen 1-Pegel) des Freigabesignals FSF und der Erzeugung eines darauf folgenden Schrittimpulses HST ermittelt und der Spulenstrom entsprechend verändert wird.

Figur 3 zeigt ein Flussdiagramm eines beispielhaften Verfahrens, mit dem die oben genannte Drehmomentreserve gemäß der zweiten Variante ermittelt wird.

Das Verfahren startet während der Motordrehung jedes Mal dann mit einem ersten Schritt 1 erneut, wenn der betreffende Schrittmotor einen (vorhergehenden) Drehschritt ausgeführt hat und ein neuer Schrittimpuls HST erzeugt wurde. Dies soll mit dem Schritt 10 angedeutet werden.

In diesen Fällen startet das Verfahren mit dem ersten Schritt 1 oder Startschritt. Mit einem zweiten Schritt 2 wird der Zähler 21 auf seinen Startwert gesetzt, der dem Vervielfachungsfaktor entspricht, mit dem die Frequenz der von dem Mikroprozessor 13 zugeführten Schrittimpulse HST mit dem Frequenzvervielfacher 20 vervielfacht wird. Beispielhaft sei bei dieser Ausführungsformen ein Faktor von 256 angenommen. Somit werden also zwischen zwei aufeinander folgenden Schrittimpulsen HST 256 Impulse ("Zählimpulse") erzeugt. Der Zähler 21 wird also mit dem zweiten Schritt 2 auf den Anfangswert 255 gesetzt und zählt ausgehend von diesem Wert rückwärts die an seinem Eingang auftretende Zählimpulse bis auf den Wert "0". Der jeweilige Zählerstand wird dem Zwischenspeicher 22 zugeführt.

Mit jeder Dekrementierung des Zählers 21 wird dann mit einem dritten Schritt 3 abgefragt, ob an dem Takteingang des Zwischenspeichers 22 eine steigende Flanke eines Freigabesignals FSF anliegt. Wenn dies nicht der Fall ist, wird mit einem vierten Schritt 4 abgefragt, ob an dem ersten Ausgang a13.1 des Mikroprozessors 13 bereits ein neuer Schrittimpuls HST erzeugt wurde. Wenn auch dies nicht der Fall ist, kehrt der Ablauf mit einem Rücksprung zu dem dritten Schritt 3 zurück, der dann für den nächsten, um den Wert "1" dekrementierten Zählerstand wiederholt wird.

Wenn jedoch in dem vierten Schritt 4 festgestellt wird, dass bereits ein neuer Schrittimpuls HST erzeugt wurde, so wird der Ablauf mit einem fünften Schritt 5 fortgesetzt, mit dem der Zählerstand auf den Wert "0" gesetzt wird, so dass also keine Drehmomentreserve vorhanden ist.

Im Anschluss daran wird mit einem sechsten Schritt 6 abgefragt, ob an dem zweiten Ausgang a13.2 des Mikroprozessors 13 eine steigende Flanke eines Schrittimpulses LST für eine Mindest-Schrittfrequenz erzeugt wurde. Wenn dies nicht der Fall ist, erfolgt ein Rücksprung zu dem dritten Schritt 3, der dann für den nächsten, um den Wert "1" dekrementierten Zählerstand wiederholt wird.

Wenn gemäß Schritt 6 eine steigende Flanke eines Schrittimpulses LST anliegt, so führt der Schrittmotor gemäß Schritt 9 den nächsten Schritt mit dem vom Stromregler vorgegebenen Stromwert aus, und das Verfahren wird beim Auftreten eines nächsten Schrittimpulses HST mit einem Rücksprung zu dem ersten Schritt 1 wiederholt.

Wenn mit der Abfrage gemäß dem dritten Schritt 3 festgestellt wurde, das an dem Takteingang des Zwischenspeicher 22 eine steigende Flanke des Freigabesignal FSF anliegt, so wird mit einem siebten Schritt 7 der aktuelle, in dem Zwischenspeicher 22 gespeicherte Zählerstand als Drehmomentreserve festgelegt und dem Stromregler 23 zugeführt.

Anschließend wird mit einem achten Schritt 8 abgefragt, ob an dem ersten Ausgang a13.1 des Mikroprozessors 13 ein neuer Schrittimpuls HST erzeugt wurde. Wenn dies nicht der Fall ist, wird diese Abfrage wiederholt, bis ein nächster Schrittimpuls HST auftritt.

Wenn die Abfrage mit dem achten Schritt 8 bejaht wird, führt nun gemäß Schritt 9 der Schrittmotor einen Drehschritt mit einem entsprechend der Drehmomentreserve angepassten Stromwert aus, und das Verfahren wird mit einem Rücksprung zu dem ersten Schritt 1 wiederholt, sobald ein neuer Schrittimpuls HST erzeugt wird.

Dieser Ablauf kann unter Berücksichtigung der obigen Erläuterungen entsprechend auch für die erste Variante realisiert werden.

Figur 4 zeigt entlang der Zeitachse t für die eingangs genannte erste Variante die Zusammenhänge zwischen dem Auftreten eines Freigabesignals FSF zu einem ersten Zeitpunkt t1 und dem Auftreten eines darauf folgenden Schrittimpulses HST zu einem späteren zweiten Zeitpunkt t2 sowie die zu der Zeitdauer t2-t1 zwischen den beiden Zeitpunkten direkt proportionale Höhe der Drehmomentreserve R. Wie aus Figur 4 deutlich wird, ist die Drehmomentreserve R umso größer, je weiter diese beiden Zeitpunkte t1, t2 auseinander liegen und umgekehrt. Wenn beide Zeitpunkte t1, t2 zusammenfallen, ist die Drehmomentreserve R Null, wenn hingegen beide Zeitpunkte t1, t2 einen Abstand voneinander aufweisen, so entspricht dieser Abstand dem maximalen Betrag Rmax der Drehmomentreserve R.

Der Betrag der Drehmomentreserve R wird im Hinblick auf deren Auswertung und die daraus resultierende Einstellung des Spulenstroms in mindestens zwei Bereiche aufgeteilt. Ausgehend von dem zweiten Zeitpunkt t2 sind dies ein unterer erster Bereich R1 zwischen R=0 und R=Ink mit relativ geringer Drehmomentreserve, ein oberer zweiter Bereich R2 zwischen R=Dek und R=Rmax mit relativ hoher Drehmomentreserve, sowie vorzugsweise ein dritter Bereich (Übergangsbereich) Hy zwischen beiden Bereichen, d.h. zwischen einem oberen Grenzwert Dek am unteren Ende des oberen zweiten Bereiches R2 und einem unteren Grenzwert Ink am oberen Ende des unteren ersten Bereiches R1.

Befindet sich die erfasste Drehmomentreserve R wie dargestellt innerhalb des zweiten Bereiches R2, so kann der Spulenstrom, vorzugsweise mit jeweils einer vorbestimmten Schrittweite, in Richtung auf und ggf. bis zu seinem minimal zulässigen bzw. vorbestimmten minimalen Spulenstromwert Imin gesenkt werden. Befindet sich die erfasste Drehmomentreserve R innerhalb des ersten Bereiches R1, so kann der Spulenstrom in Richtung auf und ggf. bis maximal auf seinen maximal zulässigen bzw. vorbestimmten Zielstromwert Imax erhöht werden, und zwar vorzugsweise wiederum mit jeweils einer vorbestimmten Schrittweite. Befindet sich die erfasste Drehmomentreserve R hingegen innerhalb des Übergangsbereiches Hy zwischen dem oberen und dem unteren Grenzwert Dek, Ink, so wird der Strom vorzugsweise nicht verändert. Die Breite des Übergangsbereiches Hy kann vorzugsweise durch den Anwender festgelegt werden und auch Null sein (Dek=Ink), so dass dann also der Spulenstrom entsprechend der Drehmomentreserve R stets entweder erhöht oder vermindert wird. Weiterhin wird der Spulenstrom vorzugsweise schneller erhöht als er vermindert wird.

Für die eingangs erwähnte zweite Variante (d.h. Erfassen des zeitlichen Abstandes bzw. der Dauer zwischen der Erzeugung eines Schrittimpulses HST zu einem ersten Zeitpunkt t1 und dem nachfolgenden Setzen eines Freigabesignals FST zu einem späteren zweiten Zeitpunkt t2) gelten die oben erläuterten Zusammenhänge gemäß Figur 4 entsprechend umgekehrt, d.h. die Höhe der Drehmomentreserve R ist umgekehrt proportional zu der Zeitdauer t2-t1.

Figur 5 zeigt schematisch ein Flussdiagramm dieses Verfahrens, wie es z.B. mit dem Stromregler 23 gemäß Figur 1 ausgeführt wird und für die erste und die zweite Variante Anwendung findet.

Wenn demnach der Spulenstrom aufgrund einer veränderten Drehmomentreserve R, wie sie z.B. gemäß dem in Figur 3 gezeigten Verfahren ermittelt wurde, geändert werden soll, so startet das Verfahren mit einem ersten Schritt 11. Mit einer ersten Abfrage gemäß einem zweiten Schritt 12 wird zunächst ermittelt, ob die neue Drehmomentreserve R größer ist als der obere Grenzwert Dek am unteren Ende des oberen zweiten Bereiches R2.

Wenn dies der Fall ist, so befindet sich die Drehmomentreserve R innerhalb des zweiten Bereiches R2, und es wird mit einem dritten Schritt 13 abgefragt, ob der aktuelle Spulenstromwert I größer ist als der vorbestimmte minimale Spulenstromwert Imin. Wenn auch diese zweite Abfrage bejaht wird, so wird in einem vierten Schritt 14 der Stromwert mit einer vorbestimmten Schrittweite dekrementiert und gemäß einem Schritt 20 als neuer Spulenstromwert übernommen. Wenn die zweite Abfrage gemäß dem dritten Schritt 13 verneint wird, so wird der Spulenstromwert gemäß einem fünften Schritt 15 auf seinen minimalen Wert Imin gesetzt und dieser gemäß Schritt 20 als neuer Spulenstromwert übernommen.

Wenn die erste Abfrage gemäß dem zweiten Schritt 12 verneint wird, so wird mit einem sechsten Schritt 16 abgefragt, ob die neue Drehmomentreserve R kleiner ist als der untere Grenzwert Ink am oberen Ende des unteren ersten Bereiches R1. Wenn auch diese Abfrage verneint wird, so befindet sich die Drehmomentreserve R innerhalb des Übergangsbereiches Hy, und es wird keine Änderung des Spulenstroms vorgenommen. Der Ablauf wird dann mit einem Rücksprung zu dem ersten Schritt 11 wiederholt.

Wenn die Abfrage gemäß dem sechsten Schritt 16 bejaht wird, so befindet sich die Drehmomentreserve R innerhalb des ersten Bereiches R1, und es wird mit einem siebten Schritt 17 abgefragt, ob der aktuelle Spulenstromwert kleiner ist als der festgelegte maximale Spulenstromwert Imax. Wenn dies der Fall ist, so wird mit einem achten Schritt 18 der Spulenstromwert mit einer vorbestimmten Schrittweite inkrementiert und gemäß Schritt 20 als aktueller Stromwert übernommen.

Wenn sich mit der Abfrage gemäß dem siebten Schritt 17 ergibt, dass der aktuellen Spulenstromwert nicht kleiner ist als der festgelegte maximale Spulenstromwert Imax, so wird mit einem neunten Schritt 19 der Spulenstromwert auf diesen maximalen Wert festgelegt und gemäß Schritt 20 als neuer aktueller Spulenstromwert übernommen. Nach dem Schritt 20 wird der Ablauf mit dem ersten Schritt 11 wiederholt, sobald der Spulenstrom an eine neue Drehmomentreserve R angepasst werden soll.

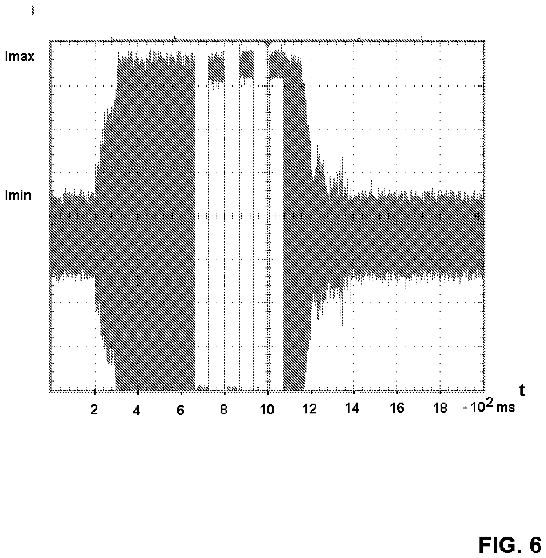

Figur 6 zeigt einen gemessenen zeitlichen Verlauf des Stroms in einer der Spulen eines Schrittmotors, wie er mit dem erfindungsgemäßen Verfahren erzielt wurde.

In dem Bereich zwischen 0 und etwa 200 ms läuft der Motor nahezu unbelastet mit abgesenktem Spulenstrom, wobei der minimale Strom Imin, auf den abgesenkt werden kann, in diesem Fall mit etwa 1/4 des maximalen Spulenstroms Imax festgelegt wurde.

In dem Bereich zwischen etwa 200 ms und etwa 600 ms erhöht sich die an dem Motor anliegende Last. Sobald die Drehmomentreserve R in den ersten Bereich R1 gemäß Figur 5 absinkt bzw. den unteren Grenzwert Ink unterschreitet, wird auch der Spulenstromwert bis zu seinem vorbestimmten maximalen Wert Imax erhöht, der bei etwa 300 ms erreicht ist. Die Geschwindigkeit des Motors bleibt in diesem Bereich unverändert bei der Zielgeschwindigkeit.

In dem Bereich zwischen etwa 600 ms und etwa 1100 ms hat sich die an dem Motor anliegende Last so weit erhöht, dass nun automatisch die Frequenz der Schrittimpulse HST und damit die Fortschalt- oder Kommutierungsgeschwindigkeit der Motorspulen vermindert wird. Dies ist aufgrund der deutlich vergrößerten zeitlichen Abstände bzw. Lücken im Stromverlauf der Spule des Motors erkennbar.

In dem Bereich ab etwa 1100 ms vermindert sich die an dem Motor anliegende Last wieder, so dass die Frequenz der Schrittimpulse HST wieder auf die Zielfrequenz vergrößert wird und sich die Geschwindigkeit des Motors automatisch wieder bis zur Zielgeschwindigkeit erhöht. Ab etwa 1200 ms ist dann die Drehmomentreserve wieder in den zweiten Bereich R2 angestiegen bzw. hat den oberen Grenzwert Dek dieses Bereiches überschritten, so dass der Spulen-Zielstromwert wieder entsprechend abgesenkt werden kann. Dies gilt zumindest dann, wenn die aktuelle Geschwindigkeit des Motors (wieder) der gewünschten Zielgeschwindigkeit entspricht.

Es soll noch darauf hingewiesen werden, dass der Betrag der Drehmomentreserve nicht nur von der Motorlast, sondern auch von dem Motorstrom abhängig ist. Durch das Absenken des Spulen-Zielstromwertes vergrößert sich auch die Drehmomentreserve, da der geringere Zielstromwert schneller in die Motorspulen eingeprägt und somit das Freigabesignal früher gesetzt wird. Dies führt dazu, dass der Motor bei geringer Last den Strom nicht sofort erhöht, sondern erst dann, wenn der untere Grenzwert Ink des unteren Bereiches R1 erreicht ist bzw. unterschritten wird. Wenn die Last nun weiter erhöht wird, so kommt es zu einem exponentiellen Anstieg des Stroms, allerdings ohne dass sich die Zielgeschwindigkeit des Motors dadurch schon vermindert.

## Patentansprüche

1. Verfahren zum Betreiben eines Schrittmotors durch drehstellungsabhängige Kommutierung und Bestromung der Spulen des Motors mit gechopperten Spulenstromimpulsen, wobei eine radiale Überdeckung zwischen einem Rotor und einer Statorspule des Motors dadurch erfasst und ein Freigabesignal (FSF) zur Freigabe der Bestromung einer nächsten Motorspule gesetzt wird, dass die Dauer (tᵢₘₚ) der gechopperten Spulenstromimpulse eine vorbestimmte Referenz-Impulsdauer (tx) unterschreitet, wobei eine nächste Motorspule durch Erzeugung eines nächsten Schrittimpulses (HST) bestromt wird, **dadurch gekennzeichnet, dass**:
- eine erste zeitliche Dauer zwischen dem Setzen eines Freigabesignals (FSF) und der darauf folgenden Erzeugung eines Schrittimpulses (HST) erfasst wird,
- ein in die Spulen des Motors einzuprägender Zielstromwert (Iset) in Richtung auf einen vorbestimmten minimalen Spulen-Zielstromwert (Imin) vermindert, oder, bei gleichem oder nur geringfügig vermindertem Zielstromwert (Iset), die Drehzahl und/oder die Beschleunigung des Motors und/oder die Motorlast entsprechend erhöht wird, wenn die erste zeitliche Dauer einen vorbestimmten oberen Grenzwert (Dek) überschreitet, und/oder
- ein in die Spulen des Motors einzuprägender Zielstromwert (Iset) in Richtung auf einen vorbestimmten maximalen Spulen-Zielstromwert (Imax) erhöht, oder, bei gleichem oder nur geringfügig erhöhtem Zielstromwert (Iset), die Drehzahl und/oder die Beschleunigung des Motors und/oder die Motorlast entsprechend vermindert wird, wenn die erste zeitliche Dauer einen vorbestimmten unteren Grenzwert (Ink) unterschreitet,
- wobei die erste zeitliche Dauer durch Zählen von Zählimpulsen ermittelt wird, die eine Frequenz aufweisen, die um einen vorbestimmten Vervielfachungsfaktor höher ist, als die Frequenz der Schrittimpulse (HST) oder die Frequenz der Freigabesignale (FSF), und die erste zeitliche Dauer eine Drehmomentreserve (R) darstellt, deren Höhe direkt proportional zu der ersten zeitlichen Dauer ist.

2. Verfahren zum Betreiben eines Schrittmotors durch drehstellungsabhängige Kommutierung und Bestromung der Spulen des Motors mit gechopperten Spulenstromimpulsen, wobei eine radiale Überdeckung zwischen einem Rotor und einer Statorspule des Motors dadurch erfasst und ein Freigabesignal (FSF) zur Freigabe der Bestromung einer nächsten Motorspule gesetzt wird, dass die Dauer (tᵢₘₚ) der gechopperten Spulenstromimpulse eine vorbestimmte Referenz-Impulsdauer (tx) unterschreitet, wobei eine nächste Motorspule durch Erzeugung eines nächsten Schrittimpulses (HST) bestromt wird, **dadurch gekennzeichnet, dass**:
- eine zweite zeitliche Dauer zwischen der Erzeugung eines Schrittimpulses (HST) und dem darauf folgenden Setzen eines Freigabesignals (FSF) erfasst wird,
- ein in die Spulen des Motors einzuprägender Zielstromwert (Iset) in Richtung auf einen vorbestimmten minimalen Spulen-Zielstromwert (Imin) vermindert, oder, bei gleichem oder nur geringfügig vermindertem Zielstromwert (Iset), die Drehzahl und/oder die Beschleunigung des Motors und/oder die Motorlast entsprechend erhöht wird, wenn die zweite zeitliche Dauer einen vorbestimmten unteren Grenzwert (Ink) unterschreitet, und/oder
- ein in die Spulen des Motors einzuprägender Zielstromwert (Iset) in Richtung auf einen vorbestimmten maximalen Spulen-Zielstromwert (Imax) erhöht, oder, bei gleichem oder nur geringfügig erhöhtem Zielstromwert (Iset), die Drehzahl und/oder die Beschleunigung des Motors und/oder die Motorlast entsprechend vermindert wird, wenn die zweite zeitliche Dauer einen vorbestimmten oberen Grenzwert (Dek) überschreitet,
- wobei die zweite zeitliche Dauer durch Zählen von Zählimpulsen ermittelt wird, die eine Frequenz aufweisen, die um einen vorbestimmten Vervielfachungsfaktor höher ist, als die Frequenz der Schrittimpulse (HST) oder die Frequenz der Freigabesignale (FSF), und die zweite zeitliche Dauer eine Drehmomentreserve (R) darstellt, deren Höhe umgekehrt proportional zu der zweiten zeitlichen Dauer ist.

3. Verfahren nach Anspruch 1 oder 2,
bei dem die Höhe der der ersten zeitlichen Dauer zugeordneten Drehmomentreserve (R) durch einen Zählerstand bestimmt ist, der durch Vorwärts-Zählen der Zählimpulse zwischen dem Setzen eines Freigabesignals (FSF) und der darauf folgenden Erzeugung eines Schrittimpulses (HST) erreicht wird, bzw.
bei dem die Höhe der der zweiten zeitlichen Dauer zugeordneten Drehmomentreserve (R) durch einen Zählerstand bestimmt ist, der durch Rückwärts-Zählen der Zählimpulse, beginnend mit einem dem Vervielfachungsfaktor entsprechenden Zählwert, zwischen der Erzeugung eines Schrittimpulses (HST) und dem darauf folgenden Setzen eines Freigabesignals (FSF) erreicht wird.

4. Verfahren nach Anspruch 1 oder 2,
bei dem der in die Spulen des Motors einzuprägende Zielstromwert (Iset) in Abhängigkeit von der ersten bzw. der zweiten zeitlichen Dauer so vermindert bzw. erhöht oder geregelt wird, dass der Lastwinkel des Motors stets in einem Bereich von weniger als 90° liegt.

5. Verfahren nach Anspruch 1 oder 2,
bei dem der in die Spulen des Motors einzuprägende Zielstromwert (Iset) bei einer Änderung der ersten bzw. der zweiten zeitlichen Dauer schneller erhöht als vermindert wird.

6. Verfahren nach Anspruch 1 oder 2,
bei dem der in die Spulen des Motors einzuprägende Zielstromwert (Iset) bei einer Änderung der ersten bzw. der zweiten zeitlichen Dauer jeweils mit einer vorbestimmten Schrittweite vermindert und/oder erhöht wird.

7. Verfahren nach Anspruch 6,
bei dem die Schrittweite, mit der der in die Spulen des Motors einzuprägende Zielstromwert (Iset) vermindert und/oder erhöht wird, zur Anpassung an eine Anwendung des Motors durch einen Anwender einstellbar ist.

8. Verfahren nach Anspruch 1 oder 2,
bei dem der obere Grenzwert (Dek) gleich dem unteren Grenzwert (Ink) ist.

9. Verfahren nach Anspruch 1 oder 2,
bei dem die Referenz-Impulsdauer (tx) zur Anpassung an eine Anwendung des Motors durch einen Anwender einstellbar ist.

10. Verfahren nach Anspruch 1 oder 2,
bei dem die Zeitdauer (t_{OFF}) zwischen aufeinander folgenden gechopperten Spulenstromimpulsen zur Anpassung an eine Anwendung des Motors durch einen Anwender einstellbar ist.

11. Schaltungsanordnung zum Betreiben eines Schrittmotors durch drehstellungsabhängige Kommutierung und Bestromung der Spulen des Motors mit gechopperten Spulenstromimpulsen, wobei eine radiale Überdeckung zwischen einem Rotor und einer Statorspule des Motors dadurch erfasst und ein Freigabesignal (FSF) zur Freigabe der Bestromung einer nächsten Motorspule gesetzt wird, dass die Dauer (tᵢₘₚ) der gechopperten Spulenstromimpulse eine vorbestimmte Referenz-Impulsdauer (tx) unterschreitet, wobei eine nächste Motorspule durch Erzeugung eines nächsten Schrittimpulses (HST) bestromt wird, insbesondere zur Durchführung eines Verfahrens nach Anspruch 1, **gekennzeichnet durch**:
- einen Frequenzvervielfacher (20) zur Erzeugung von Zählimpulsen, die eine Frequenz aufweisen, die um einen vorbestimmten Vervielfachungsfaktor höher ist, als die Frequenz der Schrittimpulse (HST) oder die Frequenz der Freigabesignale (FSF), einen Zähler (21) zum Zählen der Zählimpulse und zum Ermitteln der ersten zeitlichen Dauer zwischen dem Setzen eines Freigabesignals (FSF) und der darauf folgenden Erzeugung eines Schrittimpulses (HST), sowie einen Stromregler (23), mit dem:
- ein in die Spulen des Motors einzuprägender Zielstromwert (Iset) in Richtung auf einen vorbestimmten minimalen Spulen-Zielstromwert (Imin) vermindert, oder, bei gleichem oder nur geringfügig vermindertem Zielstromwert (Iset), die Drehzahl und/oder die Beschleunigung des Motors und/oder die Motorlast entsprechend erhöht wird, wenn die erste zeitliche Dauer einen vorbestimmten oberen Grenzwert (Dek) überschreitet, und/oder
- ein in die Spulen des Motors einzuprägender Zielstromwert (Iset) in Richtung auf einen vorbestimmten maximalen Spulen-Zielstromwert (Imax) erhöht, oder, bei gleichem oder nur geringfügig erhöhtem Zielstromwert (Iset), die Drehzahl und/oder die Beschleunigung des Motors und/oder die Motorlast entsprechend vermindert wird, wenn die erste zeitliche Dauer einen vorbestimmten unteren Grenzwert (Ink) unterschreitet,
- wobei die erste zeitliche Dauer eine Drehmomentreserve (R) darstellt, deren Höhe direkt proportional zu der ersten zeitlichen Dauer ist.

12. Schaltungsanordnung zum Betreiben eines Schrittmotors durch drehstellungsabhängige Kommutierung und Bestromung der Spulen des Motors mit gechopperten Spulenstromimpulsen, wobei eine radiale Überdeckung zwischen einem Rotor und einer Statorspule des Motors dadurch erfasst und ein Freigabesignal (FSF) zur Freigabe der Bestromung einer nächsten Motorspule gesetzt wird, dass die Dauer (tᵢₘₚ) der gechopperten Spulenstromimpulse eine vorbestimmte Referenz-Impulsdauer (tx) unterschreitet, wobei eine nächste Motorspule durch Erzeugung eines nächsten Schrittimpulses (HST) bestromt wird, insbesondere zur Durchführung eines Verfahrens nach Anspruch 2, **gekennzeichnet durch**:
- einen Frequenzvervielfacher (20) zur Erzeugung von Zählimpulsen, die eine Frequenz aufweisen, die um einen vorbestimmten Vervielfachungsfaktor höher ist, als die Frequenz der Schrittimpulse (HST) oder die Frequenz der Freigabesignale (FSF), einen Zähler (21) zum Zählen der Zählimpulse und zum Ermitteln der zweiten zeitlichen Dauer zwischen der Erzeugung eines Schrittimpulses (HST) und dem darauf folgenden Setzen eines Freigabesignals (FSF), sowie einen Stromregler (23), mit dem:
- ein in die Spulen des Motors einzuprägender Zielstromwert (Iset) in Richtung auf einen vorbestimmten minimalen Spulen-Zielstromwert (Imin) vermindert, oder, bei gleichem oder nur geringfügig vermindertem Zielstromwert (Iset), die Drehzahl und/oder die Beschleunigung des Motors und/oder die Motorlast entsprechend erhöht wird, wenn die zweite zeitliche Dauer einen vorbestimmten unteren Grenzwert (Ink) unterschreitet, und/oder
- ein in die Spulen des Motors einzuprägender Zielstromwert (Iset) in Richtung auf einen vorbestimmten maximalen Spulen-Zielstromwert (Imax) erhöht, oder, bei gleichem oder nur geringfügig erhöhtem Zielstromwert (Iset), die Drehzahl und/oder die Beschleunigung des Motors und/oder die Motorlast entsprechend vermindert wird, wenn die zweite zeitliche Dauer einen vorbestimmten oberen Grenzwert (Dek) überschreitet,
- wobei die zweite zeitliche Dauer eine Drehmomentreserve (R) darstellt, deren Höhe umgekehrt proportional zu der zweiten zeitlichen Dauer ist.

13. Schaltungsanordnung nach Anspruch 11 oder 12,
mit einem Zwischenspeicher (22):
- zum Speichern eines aktuellen Zählerstandes zum Zeitpunkt der Erzeugung eines Schrittimpulses (HST), wobei der Zähler (21) mit dem Setzen eines Freigabesignals (FSF) mit dem Zählerstand Null startend vorwärts zu zählen beginnt und der gespeicherte Zählerstand die Drehmomentreserve (R) repräsentiert, die der ersten zeitlichen Dauer direkt proportional ist, bzw.
- zum Speichern eines aktuellen Zählerstandes zum Zeitpunkt des Setzens eines Freigabesignals (FSF), wobei der Zähler (21) mit der Erzeugung eines Schrittimpulses (HST) mit einem dem Vervielfachungsfaktor entsprechenden Zählerstand startend rückwärts zu zählen beginnt und der gespeicherte Zählerstand die Drehmomentreserve (R) repräsentiert, die der zweiten zeitlichen Dauer umgekehrt proportional ist.

## Claims

1. Method for operating a stepper motor by rotationally position-dependent commutation and energization of the coils of the motor, with chopped coil current pulses, wherein a radial overlap between a rotor and a stator coil of the motor is thereby detected and an enable signal (FSF) is set to enable energization of a next motor coil, in that the duration (tᵢₘₚ) of the chopped coil current pulses falls below a predetermined reference pulse duration (tx), wherein a next motor coil is energized by generating a next step pulse (HST), **characterized in that**:
- a first time duration between the setting of an enable signal (FSF) and the subsequent generation of a step pulse (HST) is detected,
- a target current value (Iset) to be impressed in the coils of the motor is reduced towards a predetermined minimum coil target current value (Imin), or, with the same or only slightly reduced target current value (Iset), the speed and/or the acceleration of the motor and/or the motor load is correspondingly increased, if the first time duration exceeds a predetermined upper limit value (Dek), and/or
- a target current value (Iset) to be impressed in the coils of the motor is increased towards a predetermined maximum coil target current value (Imax), or, with the same or only slightly increased target current value (Iset), the speed and/or the acceleration of the motor and/or the motor load is correspondingly reduced, if the first time duration falls below a predetermined lower limit value (Ink),
- wherein the first time duration is determined by counting of counting pulses having a frequency which is higher by a predetermined multiplication factor than the frequency of the step pulses (HST) or the frequency of the enable signals (FSF), and the first time duration represents a torque reserve (R), the magnitude of which is directly proportional to the first time duration.

2. Method for operating a stepper motor by rotationally position-dependent commutation and energization of the coils of the motor, with chopped coil current pulses, wherein a radial overlap between a rotor and a stator coil of the motor is thereby detected and an enable signal (FSF) is set to enable energization of a next motor coil, in that the duration (tᵢₘp) of the chopped coil current pulses falls below a predetermined reference pulse duration (tx), wherein a next motor coil is energized by generating a next step pulse (HST), **characterized in that**:
- a second time duration between the generation of a step pulse (HST) and the subsequent setting of an enable signal (FSF) is detected,
- a target current value (Iset) to be impressed in the coils of the motor is reduced towards a predetermined minimum coil target current value (Imin), or, with the same or only slightly reduced target current value (Iset), the speed and/or the acceleration of the motor and/or the motor load is correspondingly increased, if the second time duration falls below a predetermined lower limit value (Ink), and/or
- a target current value (Iset) to be impressed in the coils of the motor is increased towards a predetermined maximum coil target current value (Imax), or, with the same or only slightly increased target current value (Iset), the speed and/or the acceleration of the motor and/or the motor load is correspondingly reduced, if the second time duration exceeds a predetermined upper limit value (Dek),
- wherein the second time duration is determined by counting of counting pulses having a frequency which is higher by a predetermined multiplication factor than the frequency of the step pulses (HST) or the frequency of the enable signals (FSF), and the second time duration represents a torque reserve (R), the magnitude of which is inversely proportional to the second time duration.

3. Method according to claim 1 or 2,
in which the magnitude of the torque reserve (R) assigned to the first time duration is determined by a counter reading which is reached by counting up the counting pulses between the setting of an enable signal (FSF) and the subsequent generation of a step pulse (HST), or
in which the magnitude of the torque reserve (R) assigned to the second time duration is determined by a counter reading which is reached by counting down the counting pulses, starting with a counter value corresponding to the multiplication factor, between the generation of a step pulse (HST) and the subsequent setting of an enable signal (FSF).

4. Method according to claim 1 or 2,
in which the target current value (Iset) to be impressed into the coils of the motor is reduced or increased or regulated in dependence on the first or the second time duration in such a way that the load angle of the motor is always in a range of less than 90°.

5. Method according to claim 1 or 2,
in which the target current value (Iset) to be impressed into the coils of the motor is increased faster than decreased when a change of the first or the second time duration occurs.

6. Method according to claim 1 or 2,
in which the target current value (Iset) to be impressed into the coils of the motor is reduced and/or increased with a predetermined step size when a change of the first or the second time duration occurs.

7. Method according to claim 6,
in which the step size with which the target current value (Iset) to be impressed into the coils of the motor is reduced and/or increased can be adjusted by a user for adaptation to an application of the motor.

8. Method according to claim 1 or 2,
in which the upper limit value (Dek) is equal to the lower limit value (Ink).

9. Method according to claim 1 or 2,
in which the reference pulse duration (tx) can be adjusted by a user for adaptation to an application of the motor.

10. Method according to claim 1 or 2,
in which the time period (t_{OFF}) between successive chopped coil current pulses can be adjusted by a user for adaptation to an application of the motor.

11. Circuit arrangement for operating a stepper motor by rotationally position-dependent commutation and energization of the coils of the motor, with chopped coil current pulses, wherein a radial overlap between a rotor and a stator coil of the motor is thereby detected and an enable signal (FSF) is set to enable energization of a next motor coil, in that the duration (tᵢₘₚ) of the chopped coil current pulses falls below a predetermined reference pulse duration (tx), wherein a next motor coil is energized by generating a next step pulse (HST), in particular for carrying out a method according to claim 1, **characterized by**:
- a frequency multiplier (20) for generating counting pulses which have a frequency which is higher by a predetermined multiplication factor than the frequency of the step pulses (HST) or the frequency of the enable signals (FSF), a counter (21) for counting the counting pulses and for determining the first time duration between the setting of an enable signal (FSF) and the subsequent generation of a step pulse (HST), and a current controller (23), with which:
- a target current value (Iset) to be impressed in the coils of the motor is reduced towards a predetermined minimum coil target current value (Imin), or, with the same or only slightly reduced target current value (Iset), the speed and/or the acceleration of the motor and/or the motor load is correspondingly increased, if the first time duration exceeds a predetermined upper limit value (Dek), and/or
- a target current value (Iset) to be impressed in the coils of the motor is increased towards a predetermined maximum coil target current value (Imax), or, with the same or only slightly increased target current value (Iset), the speed and/or the acceleration of the motor and/or the motor load is correspondingly reduced, if the first time duration falls below a predetermined lower limit value (Ink),
- wherein the first time duration represents a torque reserve (R), the magnitude of which is directly proportional to the first time duration.

12. Circuit arrangement for operating a stepper motor by rotationally position-dependent commutation and energization of the coils of the motor, with chopped coil current pulses, wherein a radial overlap between a rotor and a stator coil of the motor is thereby detected and an enable signal (FSF) is set to enable energization of a next motor coil, in that the duration (tᵢₘₚ) of the chopped coil current pulses falls below a predetermined reference pulse duration (tx), wherein a next motor coil is energized by generating a next step pulse (HST), in particular for carrying out a method according to claim 2, **characterized by**:
- a frequency multiplier (20) for generating counting pulses which have a frequency which is higher by a predetermined multiplication factor than the frequency of the step pulses (HST) or the frequency of the enable signals (FSF), a counter (21) for counting the counting pulses and for determining the second time duration between the generation of a step pulse (HST) and the subsequent setting of an enable signal (FSF), and a current controller (23), with which:
- a target current value (Iset) to be impressed in the coils of the motor is reduced towards a predetermined minimum coil target current value (Imin), or, with the same or only slightly reduced target current value (Iset), the speed and/or the acceleration of the motor and/or the motor load is correspondingly increased, if the second time duration falls below a predetermined lower limit value (Ink), and/or
- a target current value (Iset) to be impressed in the coils of the motor is increased towards a predetermined maximum coil target current value (Imax), or, with the same or only slightly increased target current value (Iset), the speed and/or the acceleration of the motor and/or the motor load is correspondingly reduced, if the second time duration exceeds a predetermined upper limit value (Dek),
- wherein the second time duration represents a torque reserve (R), the magnitude of which is inversely proportional to the second time duration.

13. Circuit arrangement according to claim 11 or 12,
comprising a buffer memory (22)
- for storing a current counter reading at the time of the generation of a step pulse (HST), wherein the counter (21) begins to count up starting with the counter reading zero when an enable signal (FSF) is set and the stored counter reading represents the torque reserve (R) which is directly proportional to the first time duration, or
- for storing a current counter reading at the time of the setting of an enable signal (FSF), wherein the counter (21) begins to count backwards starting with the generation of a step pulse (HST) with a counter reading corresponding to the multiplication factor and the stored counter reading represents the torque reserve (R) which is inversely proportional to the second time duration.

## Revendications

1. Procédé pour faire fonctionner un moteur pas à pas par commutation et excitation des bobines du moteur en fonction de la position de rotation, avec des impulsions de courant de bobine hachées, dans lequel un chevauchement radial entre un rotor et une bobine de stator du moteur est ainsi détecté et un signal de validation (FSF) est réglé pour permettre l'excitation d'une bobine de moteur suivante, en ce que la durée (tᵢₘₚ) des impulsions de courant de bobine hachées tombe en dessous d'une durée d'impulsion de référence prédéterminée (tx), dans lequel une bobine de moteur suivante est excitée par la génération d'une impulsion de pas suivante (HST), **caractérisé en ce que**:
- une première durée entre le réglage d'un signal de validation (FSF) et la génération ultérieur d'une impulsion de pas (HST) est détectée,
- une valeur cible du courant (Iset) à injecter dans les bobines du moteur est réduite vers une valeur cible du courant de bobine minimale prédéterminée (Imin), ou, avec la même valeur cible du courant (Iset) ou seulement légèrement réduite, la vitesse et/ou l'accélération du moteur et/ou la charge du moteur est augmentée en conséquence, si la première durée dépasse une valeur limite supérieure prédéterminée (Dek), et/ou
- une valeur cible du courant (Iset) à injecter dans les bobines du moteur est augmentée vers une valeur cible du courant de bobine maximale prédéterminée (Imax), ou, avec la même valeur cible du courant (Iset) ou seulement légèrement augmentée, la vitesse et/ou l'accélération du moteur et/ou la charge du moteur est réduite en conséquence, si la première durée tombe en dessous d'une valeur limite inférieure prédéterminée (Ink),
- dans lequel la première durée est déterminée par le comptage d'impulsions de comptage ayant une fréquence qui est supérieure d'un facteur de multiplication prédéterminé à la fréquence des impulsions de pas (HST) ou à la fréquence des signaux de validation (FSF), et la première durée représente une réserve de couple (R), dont l'amplitude est directement proportionnelle à la première durée.

2. Procédé pour faire fonctionner un moteur pas à pas par commutation et excitation des bobines du moteur en fonction de la position de rotation, avec des impulsions de courant de bobine hachées, dans lequel un chevauchement radial entre un rotor et une bobine de stator du moteur est ainsi détecté et un signal de validation (FSF) est réglé pour permettre l'excitation d'une bobine de moteur suivante, en ce que la durée (tᵢₘₚ) des impulsions de courant de bobine hachées tombe en dessous d'une durée d'impulsion de référence prédéterminée (tx), dans lequel une bobine de moteur suivante est excitée par la génération d'une impulsion de pas suivante (HST), **caractérisé en ce que**:
- une deuxième durée entre la génération d'une impulsion de pas (HST) et le réglage ultérieur d'un signal de validation (FSF) est détectée,
- une valeur cible du courant (Iset) à injecter dans les bobines du moteur est réduite vers une valeur cible du courant de bobine minimale prédéterminée (Imin), ou, avec la même valeur cible du courant (Iset) ou seulement légèrement réduite, la vitesse et/ou l'accélération du moteur et/ou la charge du moteur est augmentée en conséquence, si la deuxième durée tombe en dessous d'une valeur limite inférieure prédéterminée (Ink), et/ou
- une valeur cible du courant (Iset) à injecter dans les bobines du moteur est augmentée vers une valeur cible du courant de bobine maximale prédéterminée (Imax), ou, avec la même valeur cible du courant (Iset) ou seulement légèrement augmentée, la vitesse et/ou l'accélération du moteur et/ou la charge du moteur est réduite en conséquence, si la deuxième durée dépasse une valeur limite supérieure prédéterminée (Dek),
- dans lequel la deuxième durée est déterminée par le comptage d'impulsions de comptage ayant une fréquence qui est supérieure d'un facteur de multiplication prédéterminé à la fréquence des impulsions de pas (HST) ou à la fréquence des signaux de validation (FSF), et la deuxième durée représente une réserve de couple (R), dont l'amplitude est inversement proportionnelle à la deuxième durée.

3. Procédé selon la revendication 1 ou 2,
dans lequel l'amplitude de la réserve de couple (R) affectée à la première durée est déterminé par une valeur de compteur qui est obtenue en comptant les impulsions de comptage vers le haut entre le réglage d'un signal de validation (FSF) et la génération ultérieur d'une impulsion de pas (HST), ou
dans lequel l'amplitude de la réserve de couple (R) affectée à la deuxième durée est déterminée par une valeur de compteur qui est obtenue en décomptant les impulsions de comptage, en commençant par une valeur de compteur correspondant au facteur de multiplication, entre la génération d'une impulsion de pas (HST) et le réglage ultérieur d'un signal de validation (FSF).

4. Procédé selon la revendication 1 ou 2,
dans lequel la valeur cible du courant (Iset) à injecter dans les bobines du moteur est réduite ou augmentée ou régulée en fonction de la première ou de la deuxième durée de manière à ce que l'angle de charge du moteur soit toujours dans une plage inférieure à 90°.

5. Procédé selon la revendication 1 ou 2,
dans lequel la valeur cible du courant (Iset) à injecter dans les bobines du moteur augmente plus vite qu'elle ne diminue lorsqu'un changement de la première ou de la deuxième durée se produit.

6. Procédé selon la revendication 1 ou 2,
dans lequel la valeur cible du courant (Iset) à injecter dans les bobines du moteur est réduite et/ou augmentée d'une valeur d'étape prédéterminée lorsqu'un changement de la première ou de la deuxième durée se produit.

7. Procédé selon la revendication 6,
dans lequel la taille d'étape avec lequel la valeur cible du courant (Iset) à injecter dans les bobines du moteur est réduite et/ou augmentée peut être ajustée par un utilisateur pour l'adapter à une application du moteur.

8. Procédé selon la revendication 1 ou 2,
dans lequel la valeur limite supérieure (Dek) est égale à la valeur limite inférieure (Ink).

9. Procédé selon la revendication 1 ou 2,
dans lequel la durée d'impulsion de référence (tx) peut être ajustée par un utilisateur pour l'adapter à une application du moteur.

10. Procédé selon la revendication 1 ou 2,
dans lequel la période de temps (t_{OFF}) entre les impulsions de courant de bobine hachée successives peut être ajustée par un utilisateur pour l'adaptation à une application du moteur.

11. Ensemble circuit pour le fonctionnement d'un moteur pas à pas par commutation et excitation des bobines du moteur en fonction de la position de rotation, avec des impulsions de courant de bobine hachées, dans lequel un chevauchement radial entre un rotor et une bobine de stator du moteur est ainsi détecté et un signal de validation (FSF) est réglé pour permettre l'excitation d'une bobine de moteur suivante, en ce que la durée (tᵢₘₚ) des impulsions de courant de bobine hachée tombe en dessous d'une durée d'impulsion de référence prédéterminée (tx), dans lequel une bobine de moteur suivante est excitée par la génération d'une impulsion de pas suivante (HST), en particulier pour l'exécution d'une procédure selon la revendication 1, **caractérisé par**:
- un multiplicateur de fréquence (20) pour générer des impulsions de comptage qui ont une fréquence qui est supérieure d'un facteur de multiplication prédéterminé à la fréquence des impulsions de pas (HST) ou à la fréquence des signaux de validation (FSF), un compteur (21) pour compter les impulsions de comptage et pour déterminer la première durée entre le réglage d'un signal de validation (FSF) et la génération ultérieur d'une impulsion de pas (HST), et un contrôleur de courant (23), avec lequel:
- une valeur cible du courant (Iset) à injecter dans les bobines du moteur est réduite vers une valeur cible du courant de bobine minimale prédéterminée (Imin), ou, avec la même valeur cible du courant (Iset) ou seulement légèrement réduite, la vitesse et/ou l'accélération du moteur et/ou la charge du moteur est augmentée en conséquence, si la première durée dépasse une valeur limite supérieure prédéterminée (Dek), et/ou
- une valeur cible du courant (Iset) à injecter dans les bobines du moteur est augmentée vers une valeur cible du courant de bobine maximale prédéterminée (Imax), ou, avec la même valeur cible du courant (Iset) ou seulement légèrement augmentée, la vitesse et/ou l'accélération du moteur et/ou la charge du moteur est réduite en conséquence, si la première durée tombe en dessous d'une valeur limite inférieure prédéterminée (Ink),
- dans lequel la première durée représente une réserve de couple (R), dont l'amplitude est directement proportionnelle à la première durée.

12. Ensemble circuit pour le fonctionnement d'un moteur pas à pas par commutation et excitation des bobines du moteur en fonction de la position de rotation, avec des impulsions de courant de bobine hachées, dans lequel un chevauchement radial entre un rotor et une bobine de stator du moteur est ainsi détecté et un signal de validation (FSF) est réglé pour permettre l'excitation d'une bobine de moteur suivante, en ce que la durée (tᵢₘₚ) des impulsions de courant de bobine hachée tombe en dessous d'une durée d'impulsion de référence prédéterminée (tx), dans lequel une bobine de moteur suivante est excitée par la génération d'une impulsion de pas suivante (HST), en particulier pour la mise en oeuvre d'un procédé selon la revendication 2, **caractérisé par**:
- un multiplicateur de fréquence (20) pour générer des impulsions de comptage qui ont une fréquence qui est supérieure d'un facteur de multiplication prédéterminé à la fréquence des impulsions de pas (HST) ou à la fréquence des signaux de validation (FSF), un compteur (21) pour compter les impulsions de comptage et pour déterminer la deuxième durée entre la génération d'une impulsion de pas (HST) et le réglage ultérieur d'un signal de validation (FSF), et un contrôleur de courant (23), avec lequel:
- une valeur cible du courant (Iset) à injecter dans les bobines du moteur est réduite vers une valeur cible du courant de bobine minimale prédéterminée (Imin), ou, avec la même valeur cible du courant (Iset) ou seulement légèrement réduite, la vitesse et/ou l'accélération du moteur et/ou la charge du moteur est augmentée en conséquence, si la deuxième durée tombe en dessous d'une valeur limite inférieure prédéterminée (Ink), et/ou
- une valeur cible du courant (Iset) à injecter dans les bobines du moteur est augmentée vers une valeur cible du courant de bobine maximale prédéterminée (Imax), ou, avec la même valeur cible du courant (Iset) ou seulement légèrement augmentée, la vitesse et/ou l'accélération du moteur et/ou la charge du moteur est réduite en conséquence, si la deuxième durée dépasse une valeur limite supérieure prédéterminée (Dek),
- dans lequel la deuxième durée représente une réserve de couple (R) dont l'amplitude est inversement proportionnelle à la deuxième durée.

13. Ensemble circuit selon la revendication 11 ou 12,
comprenant une mémoire tampon (22)
- pour stocker une valeur de compteur actuelle au moment de la génération d'une impulsion de pas (HST), dans lequel le compteur (21) commence à compter à partir de la valeur de compteur zéro lorsqu'un signal de validation (FSF) est défini et la valeur de compteur stockée représente la réserve de couple (R) qui est directement proportionnelle à la première durée, ou
- pour stocker une valeur de compteur actuelle au moment du réglage d'un signal de validation (FSF), dans lequel le compteur (21) commence à compter à rebours à partir de la génération d'une impulsion de pas (HST) avec une valeur de compteur correspondant au facteur de multiplication et la valeur de compteur stockée représente la réserve de couple (R) qui est inversement proportionnelle à la deuxième durée.
